# EUROPEAN PATENT APPLICATION

(11) **EP 2 133 630 A2**
(43) Date of publication of application: **16.12.2009**
(21) Application number: 09162519.4
(22) Date of filing: 11.06.2009
(51) Int. Cl.: F24D 12/02

(54) **Device for recovery of the fume heat and discharge of combustion fumes for a boiler**

(30) Priority: 12.06.2008 IT BG20080037
(71) Applicant: Groppalli S.r.l., 29010 Gragnano Trebbiense (PC) (IT)
(72) Inventor: Groppalli, Luciano, 29070 Agazzano (PC) (IT)
(74) Representative: Giavarini, Francesco

(57) **Abstract**

The present invention relates to a device for recovery of fume heat and discharge of the combustion fumes for a domestic boiler. The device according to the invention can be connected to a boiler and comprises at least one first tubular element, which may be traversed by fumes produced in a boiler. Said first tubular element comprises a fume-inlet section and a fume-discharge section opposite to the fume-inlet section. The device likewise comprises heat-exchanger means housed within the first tubular element for transferring at least part of the thermal energy of the fumes to water at a lower temperature circulating within said heat-exchanger means. The latter means comprise a plurality of heat-exchange elements connected together so as to configure a hydraulic circuit within the first tubular element such that transfer of the thermal energy is obtained partially in conditions of equicurrent and partially in conditions of countercurrent.

## Description

The present invention relates to a device for recovery of the fume heat and discharge of combustion fumes for a boiler.

As is known, boilers are thermal apparatuses traditionally used for heating water that is to be introduced into a heating circuit or else to be used for sanitary purposes for the personal requirements of users. Boilers traditionally comprise a combustion chamber, housed in the proximity of which is a heat exchanger, referred to as primary heat exchanger, in order to provide for heating of water. The fumes produced following upon combustion possess, as is known, a high thermal energy, which can advantageously be recovered in order to pre-heat the water entering the primary heat exchanger. This enables limitation of the amount of fuel consumed in so far as the thermal jump required becomes smaller given the same final temperature required for the water leaving the boiler.

In order to recover said thermal energy, devices are traditionally used for recovery of flue-gas heat, which are at times also referred to as "economizers". They usually comprise heat exchangers (also referred to as secondary heat exchangers), located in most cases inside the boiler between the combustion chamber and a discharge mouth, at which pipes are inserted that convey the fumes into the atmosphere.

An example of boiler equipped with a secondary heat exchanger is described in the patent application No. EP 0945688. In particular, in this technical solution, which is similar to many others of the sector, the secondary heat exchanger is constituted by a bank of tubes housed in a container inside the boiler casing. The tubes are internally traversed by water and are externally lapped by the combustion fumes conveyed within the container by means of a fan. Through a convective-conductive heat exchange, the thermal energy of the flue gas is transferred from the flue gas to the water. In order to favour this heat exchange, the solution illustrated envisages the use of a partition wall, which, by separating the inlet of the flue gases from the outlet, enables them to follow a predefined path.

The solution just referred to, like many other similar ones (see, for instance, the patent application No. EP 1243866) present certain limits linked in particular to the modalities of construction and assembly of the heat exchangers. Current secondary heat exchangers are rather bulky and need for their positioning appropriate housings inside the boiler. The design and definition of the arrangement of the components of the boiler are hence markedly affected by the type of heat exchanger used and frequently entail long and laborious preliminary studies.

In more recent technical solutions, the thermal energy of the flue gases is recovered through heat exchangers that are positioned in the flue of the boiler. With reference to Figure 1, the patent application No. WO 2006/059215, for example, describes a device (100) for discharge of fumes of a domestic boiler, said device being provided with a tubular element, housed in which are heat-exchanger means (105) for transferring the thermal energy of the flue gases to the circuit for the water that is to enter the primary heat exchanger of the boiler. From the constructional standpoint, the device in question is connected to a boiler (150) through a flange adapter (130), which also configures a system for discharge of the condensate that forms within the tubular elements. The heat-exchanger means (105) are basically formed by a heat-exchange tube, defined within which are two cavities designed to be traversed in opposite directions by water to be heated.

Practice has shown that the solution in question is accompanied by various drawbacks. It has been seen, in fact, that the efficiency of the heat exchange enabled by the heat-exchanger means is rather limited in part on account of the configuration of the heat-exchange elements. The current configuration of the heat-exchanger means limits the efficiency of the conductive heat exchange between the metal surface of the heat-exchange elements and the water circulating therein. More precisely, it has been noted that the current configuration of the heat-exchanger elements enables effective heating of only rather modest amounts of water.

On the basis of the considerations made so far, there emerges the need to have available devices for recovery of fume heat and discharge of fumes that are economically advantageous, can be easily assembled, and are contained in volume. Consequently, a primary task of what forms the subject of the present invention is to provide a device for recovery of fume heat that is able to overcome the drawbacks just referred to.

In the framework of this task, a purpose of the present invention is to provide a device for recovery of fume heat and discharge of fumes that will present an efficiency higher than that of devices traditionally used for the same function.

Another purpose of the present invention is to provide a device for recovery of fume heat and discharge of fumes that will enable heating of an amount of water greater than the amount that can usually be heated using traditional devices.

Yet another purpose of the present invention is to provide a device for recovery of fume heat and discharge of fumes that is obtained using a limited number of components that can be easily assembled together.

A further purpose of the present invention is to provide a device for recovery of fume heat and discharge of fumes that can be operatively connected to a boiler in a rapid and simple way.

Not the least important purpose of what forms the subject of the present invention is to provide a device for recovery of fume heat and discharge of fumes that is highly reliable and is relatively easy to produce at competitive costs.

The above task, as well as the above and other purposes that will emerge more clearly in what follows, are achieved through a device for recovery of fume heat and discharge of fumes according to what is specified in Claim 1 and the claims depending thereon.

It has been seen that the device for recovery of fume heat according to the invention has an efficiency higher than that of the devices already used for the same purpose. This is determined by the presence of a high surface of heat exchange, deriving from the use of a circuit formed by a plurality of externally finned heat-exchange elements. The high efficiency is moreover reached also on account of the modality with which the heat exchange is obtained, which envisages a first heat exchange in conditions of equicurrent and a second heat exchange in conditions of countercurrent. The use of a plurality of heat-exchange elements enables at the same time an increase in the total amount of water that can be heated through the heat-exchanger means.

Further characteristics and advantages of the invention will emerge more clearly from the description of preferred, but non-exclusive, examples of embodiments of the device for recovery of fume heat and discharge of fumes according to the invention illustrated by way of example in the annexed drawings, wherein:

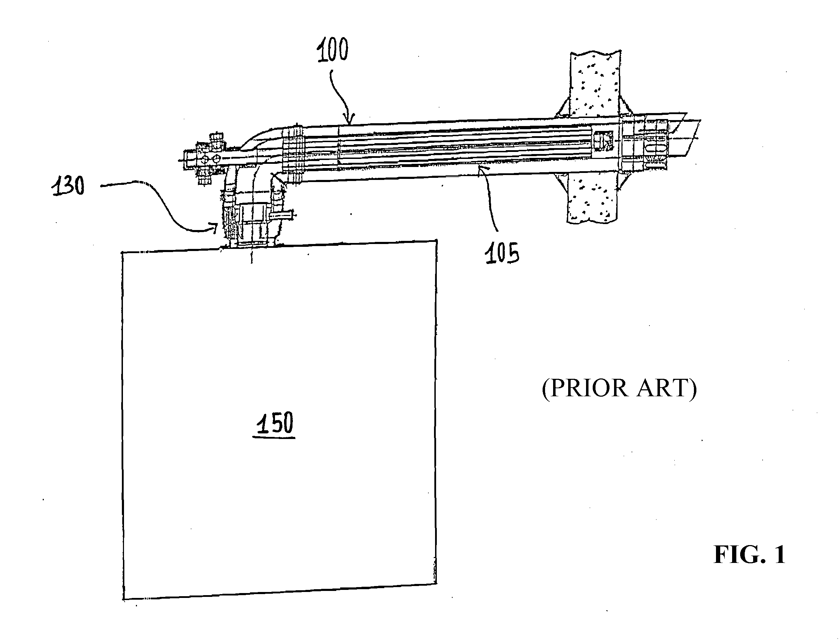

- Figure 1 is a view regarding a device for recovery of fume heat comprised in the known art applied to a boiler;
- Figure 2 is a view regarding a first embodiment of a device for recovery of fume heat and discharge of fumes installed on a boiler;
- Figure 3 is a perspective view of the device for recovery of fume heat illustrated in Figure 2;
- Figure 4 is a cross-sectional view according to a plane of longitudinal section of the device of Figure 3;
- Figure 5 is a detailed view of an adapter of the device of Figure 4;
- Figure 6 is a plan view of the device of Figure 3;
- Figure 7 is a cross-sectional view according to the line VII-VII of Figure 6;
- Figure 8 is a cross-sectional view according to the line VIII-VIII of Figure 7;
- Figure 9 is a cross-sectional view according to the line IX-IX of Figure 7;
- Figure 10 is a view regarding a second embodiment of a device for recovery of fume heat and discharge of fumes according to the present invention installed on a boiler;
- Figure 11 is a perspective view regarding the device illustrated in Figure 10;
- Figure 12 is a cross-sectional view according to a longitudinal plane of the device for recovery of fume heat and discharge of fumes of Figure 11;
- Figure 13 is a plan view of the device of Figure 11;
- Figure 14 is a cross-sectional view according to the line XIV-XIV of Figure 13;
- Figure 15 is a cross-sectional view according to the line XV-XV of Figure 13; and
- Figure 16 is a cross-sectional view according to the line XVI-XVI of Figure 13;
- Figure 17 is analogous to Figure 2 but is related to a further embodiment of the present invention;
- Figure 18 is analogous to Figure 3 but is related to the embodiment of figure 17;
- Figure 19 is analogous to Figure 13 but is related to the embodiment of figure 17;
- Figure 20 is analogous to Figure 14 but is related to the embodiment of figure 17;
- Figure 21 is a cross-sectional view according to the line XXI-XXI of Figure 19;
- Figure 22 is a cross-sectional view according to the line XXII-XXII of Figure 19;
- Figure 23 shows a cross-sectional three-dimensional view of a further embodiment according to the invention;
- Figure 24 shows a further cross-sectional three-dimensional view of the embodiment of Figure 23;
- Figure 25 is analogous to figure 2 but regards a further embodiment of the present invention;
- Figure 26 is analogous to figure 2 but regards a further embodiment of the present invention;
- Figure 27 is analogous to Figure 3 but is related to the embodiment of Figure 26;
- Figure 28 shows a view analogous to Figure 4 but related to the embodiment of Figure 26;
- Figure 29 shows an enlarged view of parts of Figure 28;
- Figure 30 shows a view analogous to Figure 6 but related to the embodiment of Figure 26;
- Figure 31 is a cross-sectional view according to the line XXXI-XXXI of Figure 30;
- Figure 32 is a cross-sectional view according to the line XXXII-XXXII of Figure 31;
- Figure 33 is a cross-sectional view according to the line XXXIII-XXXIII of Figure 31.

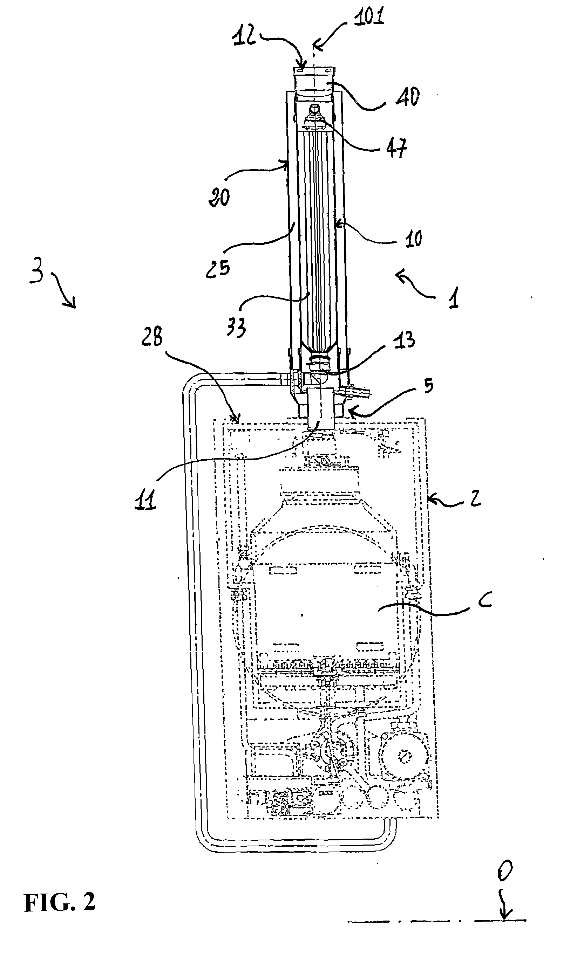

With reference to Figures 2 to 16, the device 1 for recovery of fume heat and discharge of fumes according to the invention comprises at least one first tubular element 10, which is capable of being traversed by fumes generated in the combustion chamber of a domestic boiler 2. Said first tubular element 10 has a fume-inlet section 11 and a fume-discharge section 12 substantially opposite to the fume-inlet section 11. The device 1 likewise comprises heat-exchanger means housed within the first tubular element 10. Said heat-exchanger means are prearranged for transferring thermal energy from the fumes to water to be heated circulating inside said heat-exchanger means during operation of the device 1. In this way, the water circulating in the heat-exchanger means, at a temperature lower than that of the combustion fumes, may advantageously be sent to the primary heat exchanger of the boiler 2 to improve the efficiency of the boiler itself. Alternatively, the heated water may be directly used for heating or for sanitary purposes.

The device 1 for recovery of fume heat and discharge of fumes according to the invention is **characterized in that** the heat-exchanger means comprise a plurality of heat-exchange elements 33 connected together so as to configure a hydraulic circuit within the first tubular element 10 such that the heat exchange between the fumes and the water occurs partially in conditions of equicurrent and partially in conditions of countercurrent. It has been seen that the combination of the technical solutions just described optimises the heat exchange and enables levels of efficiency to be achieved higher than those currently achieved by other devices used for the same purpose. At the same time, it has been seen that also the flow rates of heatable water are markedly higher than those traditionally treated.

The device 1 for recovery of fume heat and discharge of fumes preferably comprises a second tubular element 20, operatively located within which is the first tubular element 10 in such a way as to generate an annular space 25 for the passage of air that is to go to the boiler 2 and can be used as comburent in the combustion chamber (designated by C) of the boiler itself. During normal operation of the boiler 2, the air that traverses the annular space 25 is heated, lapping the outer surface of the first tubular element 10. In this way, the total efficiency of combustion of the boiler 2 is advantageously improved.

Figures 2 to 9 regard a first embodiment of a device 1 for recovery of fume heat and discharge of fumes according to the invention that can be installed on an attachment surface 2B of a domestic boiler 2. More precisely, said attachment surface 2B is identified preferably by the top surface of the boiler 2 evaluated with respect to a substantially horizontal plane of reference O. In this connection, it is to be understood that the device 1 is provided for being advantageously connected to any type of boiler normally used in the domestic sector whether this be of a traditional type or else of the commonly called "condensation" type.

The device 1 according to the invention illustrated in Figures 2 to 9 is installed on the attachment surface 2B according to a substantially "vertical" modality such that the longitudinal axis 101 of at least one of the two tubular elements 10, 20 is substantially perpendicular to the attachment surface 2B of the boiler, i.e., to the horizontal plane of reference O. More precisely, the connection of the two tubular elements 10 and 20 to the attachment surface 2B is provided through a first adapter 5 configured so as to orient the longitudinal axis of both of the tubular elements 10 and 20 perpendicular to the attachment surface 2B. The two tubular elements 10 and 20 are set in a substantially coaxial position where by this expression is meant a mutual position such that the longitudinal axes substantially coincide.

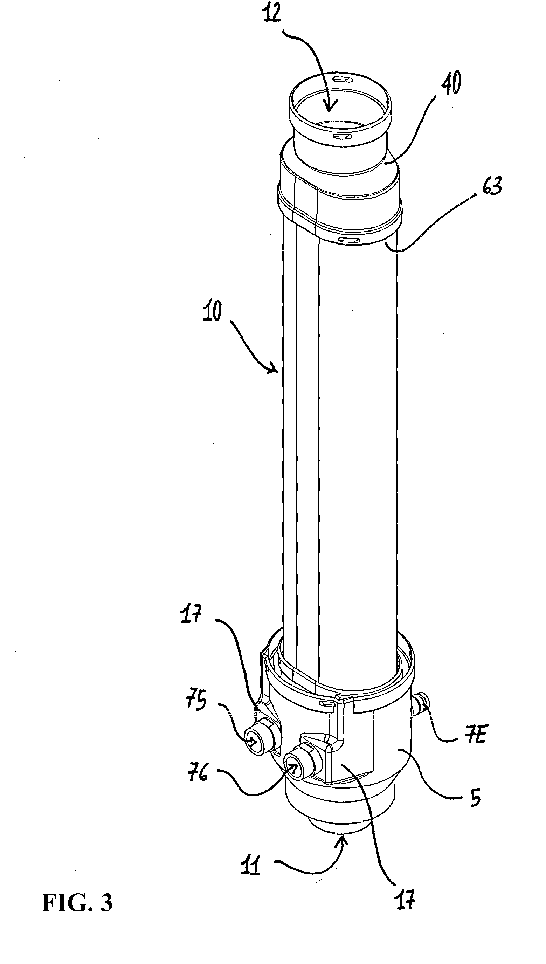

Figure 3 is a perspective view of the device 1 illustrated in Figure 2 without the second tubular element 20. In particular, Figure 3 illustrates a possible embodiment of the first adapter 5, which comprises supporting portions 17 provided for supporting hydraulic connections 75, 76, each of which is connected to a heat-exchange element 33. In detail, a first hydraulic connection 75 enables supply of the hydraulic circuit configured by the heat-exchange elements 33, whilst a second hydraulic connection 76 enables evacuation of the water from the circuit itself. The hydraulic connections 75, 76 are set in a mutually adjacent position so as to emerge parallel with respect to the first adapter 5. In detail, said connections 75, 76 are oriented in a substantially inclined direction, preferably horizontal, with respect to the vertical direction (vertical position evaluated with respect to the attachment surface 2B of the boiler 2).

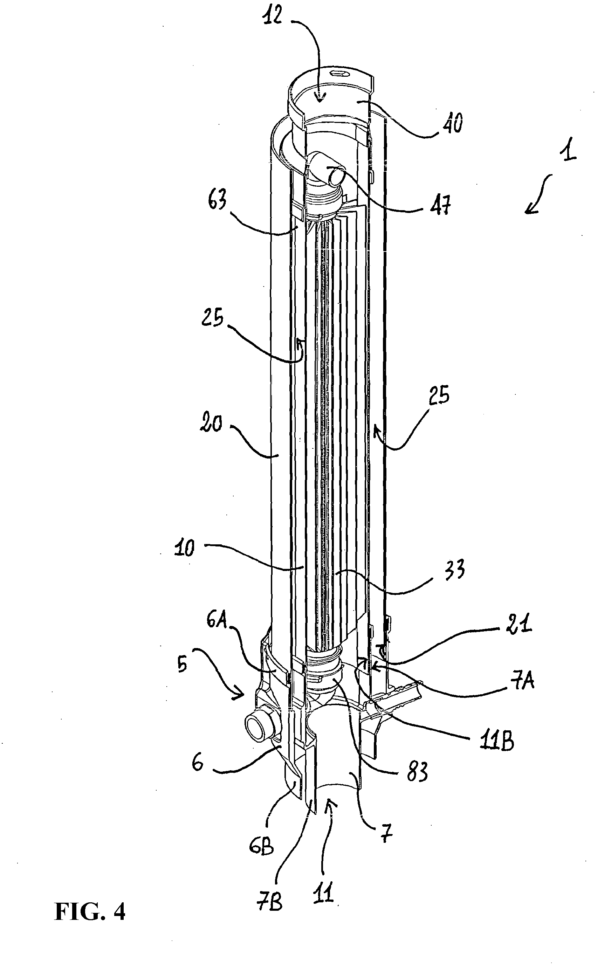

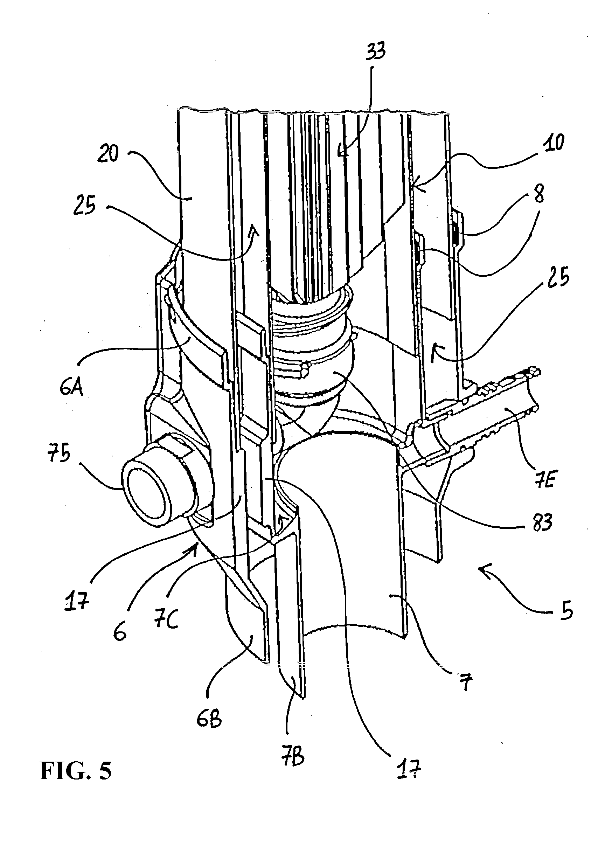

Figure 4 is a longitudinal cutaway view of the device 1 illustrated in Figure 2. Figure 5 is instead a detailed view of the first adapter 5 illustrated in Figure 4. As shown, said first adapter 5 is made up of an external connection body 6 (hereinafter referred to also just by the expression "outer body" 6) and an internal connection body 7 (hereinafter referred to also just by the expression "inner body" 7), respectively, for connection of the second tubular element 20 and of the first tubular element 10 to the attachment surface 2B of the boiler 2. More precisely, the outer body 6 configures a first external edge 6A, which couples to a first end 21 1 of the second tubular element 20. The outer body 6 moreover configures a second external edge 6B (in a position substantially opposite to the first edge 6A) for mechanical connection of the second tubular element 20 to the boiler 2.

Likewise, the internal connection body 7 configures a first internal edge 7A, which couples to a second end 11B of the first tubular element 10. The inner body 7 moreover comprises a second internal edge 7B (in a position opposite to the second edge 7A), which emerges axially with respect to the second external edge 6B of the outer body 6. Said second internal edge 7B has the function of conveying the fumes coming from the combustion chamber of the boiler 2 within the first tubular element 10 basically configuring the fume-inlet section 11 of the device for recovery of fume heat and discharge of fumes.

Advantageously set between the parts of the first adapter 5 that are coupled to those of the tubular elements 10, 20 are sealing elements 8, which, in the case of the first internal edge 7A, have the purpose of preventing mixing of the air that traverses the annular space 25 with the fumes coming from the boiler 2, whereas, in the case of the first external edge 6A, they have the purpose of ensuring the internal tightness in regard to the air that traverses the annular space 25.

With reference once again to Figure 5, the hydraulic connections 75, 76 are operatively connected to corresponding heat-exchange elements 33 through radiusing curves 83 prevalently housed within the inner body 7 of the first adapter 5. From Figure 5 it may be understood how the supporting portions 17 of the first adapter 5 are designed so as to support operatively the weight of the heat-exchange elements 33 housed in the first tubular element 10. In this connection, in the solution illustrated said supporting portions 17 are formed by an appropriate thickening of corresponding portions of the outer body 6 and of the inner body 7 of the first adapter 5.

The first adapter 5 of the device 1 advantageously configures also a system of collection and discharge of the condensate that forms within the first tubular element 10 following upon the heat exchange between the fumes coming from the boiler and the heat-exchange elements 33. Said collection system comprises an annular collection basin 7C configured by the inner body 7 of the first adapter 5 and a discharge element 7E in communication with said collection basin 7C. As illustrated in Figure 5, the discharge element 7E can comprise a hollow tube that emerges on the outside of the first adapter 5. Through this solution the condensate that forms within the first tubular element drops by gravity along the walls thereof until it converges in the collection basin 7C. Through the discharge element 7E the condensate is then conveyed outside the first adapter 5.

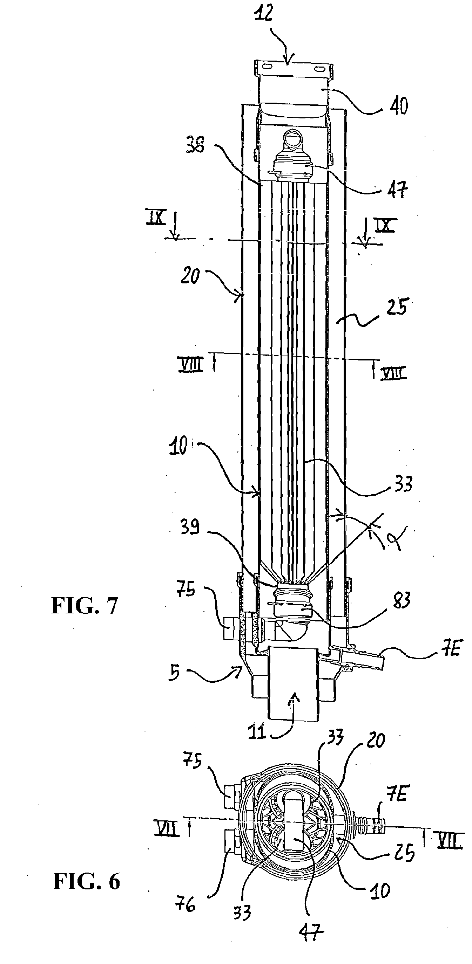

Figures 6 to 9 show further peculiarities of the device for recovery of fume heat and discharge of fumes according to the invention. The plan view of Figure 6 for example shows a possible embodiment of the tubular elements 10 and 20 in which the second tubular element 20 has a substantially cylindrical cross section, whilst the first tubular element 10 has an ellipsoidal cross section. According to this latter solution, the heat-exchanger means comprise a pair of elongated heat-exchange elements 33, which are hollow and externally finned with external finning that develops in the longitudinal direction on the outer surface.

Said elements 33 are located within the first tubular element 10 so that the respective longitudinal axes are parallel to the longitudinal axis 101 of the first tubular element 10. With reference to Figure 7, for example, it may be noted that each heat-exchange element 33 comprises one first terminal part 38 located in a position close to the fume-discharge section 12, whilst a second terminal part 39, substantially opposite to the first 38, is operatively connected to one of said hydraulic connections 75, 76 through a radiusing curve 83 that is located substantially within the inner body 7 of the first adapter 5.

With reference once again to the plan view of Figure 6, the hydraulic circuit of the heat-exchanger means comprises a flow-reversal connector 47, which connects the corresponding first terminal portions 38 of the heat-exchange elements 33. Said flow-reversal connector 47 enables, in practice, reversal of the direction of the flow of the water during passage thereof from one heat-exchange element 33 to the other. In this way, the mode of heat exchange varies, becoming from equicurrent to countercurrent. In this connection, the flow-reversal connector 47 has a substantially U-shaped configuration, as may be appreciated from the cutaway view in Figure 4, which shows in any case only one half of the flow-reversal connector 47.

Figure 7 is a cross-sectional view according to the line VII-VII of Figure 6 and illustrates another peculiarity of the heat-exchange elements 33. In particular, in the proximity of the second terminal part 39, the longitudinal fins 44, 45 of the heat-exchange elements 33 are chamfered in a longitudinal direction by a certain angle α̇ in such a way as to favour outflow of the fumes within longitudinal sectors of outflow delimited between the longitudinal fins 44, 45 and the internal surface of the first tubular element 10.

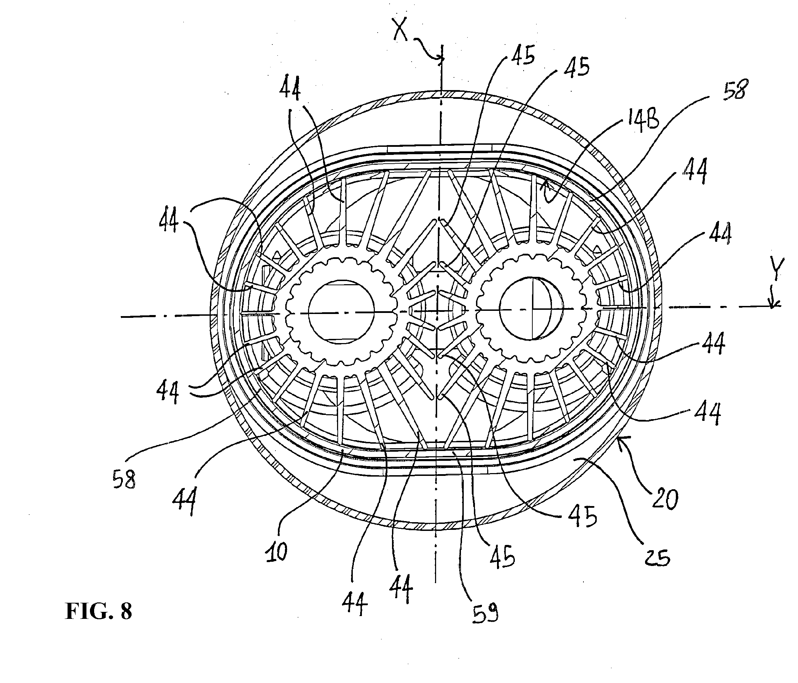

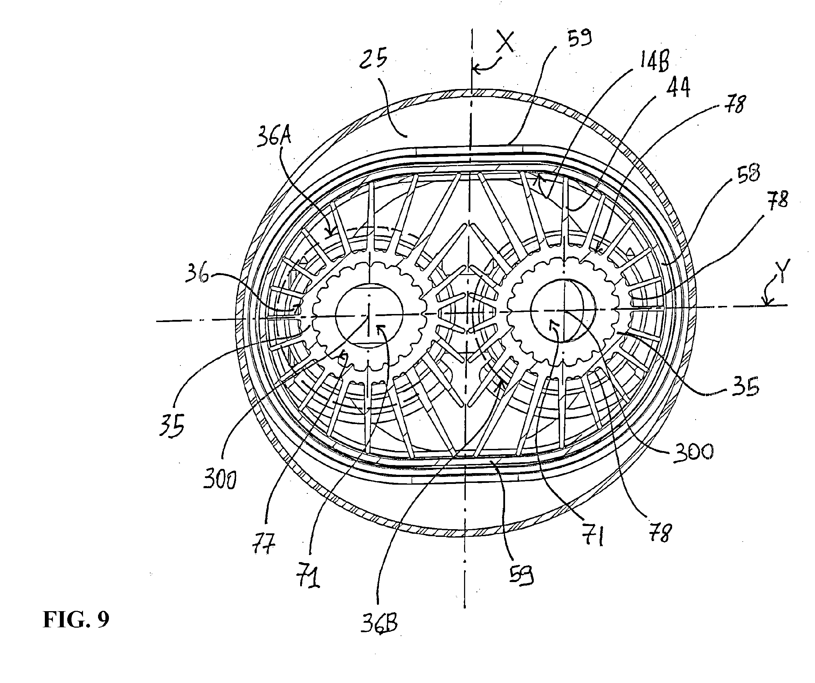

Figures 8 and 9 are cross-sectional views according to the line VIII-VIII and the line IX-IX, respectively, of Figure 7 and show in detail the cross section of the first tubular element 10 and the cross section of the two heat-exchange elements 33 housed therein. As mentioned above, the first tubular element 10 has an ellipsoidal cross section. The term "ellipsoidal" is intended to indicate a generic geometrical shape that "recalls" the shape of an ellipse (not necessarily coinciding with the definition of ellipse itself) and that is symmetrical with respect to two mutually orthogonal axes of symmetry X, Y. In detail, the cross section of the first element 10 is made up of two semicircular portions 58, which are symmetrical with respect to a first axis X and are connected together through two rectilinear portions 59, which are opposed with respect to a second axis Y orthogonal to the first axis X.

Each heat-exchange element 33 is formed by a tubular body 35 that defines a longitudinal cavity 71 for the passage of water. Each cavity 71 (see Figure 9) is delimited by an internal surface of a cylindrical shape, which has a plurality of radial projections 77 that develop preferably throughout the longitudinal development of the cavity 71. The two heat-exchange elements 33 are located within the first tubular element 10 so that the longitudinal axes 300 of the cavities 71 are aligned along the second axis of symmetry Y of the cross section, occupying at the same time a position symmetrical to the first axis of symmetry X of the cross section itself.

The tubular body 35 comprises a plurality of longitudinal fins 44, 45 that develop from its outer surface 36 in different directions. In greater detail, in the solution illustrated, each tubular body 35 comprises a series of first longitudinal fins 44, which extend symmetrically with respect to the aforesaid second axis of symmetry Y from a first portion 36A (indicated in Figure 9 with a dashed line concentric to the portion in question) of the outer surface 36. In greater detail, said first fins 44 extend so as to occupy a position adjacent to the internal surface 14B of the longitudinal portion 14 of the first tubular element 10 and so as to be specular, with respect to the first axis X, to corresponding fins of the other element.

With reference once again to Figures 8 and 9, each tubular body 35 moreover comprises a series of second longitudinal fins 45 that extend symmetrically from a second portion 36B (indicated in Figure 9 with a dashed line concentric to the portion in question) of the outer surface 36 with respect to the aforesaid second axis of symmetry Y. In detail, said second fins 45, of one of the two tubular bodies 35, extend so as to occupy a position specular to corresponding second fins 45 of the other tubular body 35 with respect to the aforesaid first axis of symmetry X.

With reference once again to Figure 9, according to a preferred embodiment, the outer surface 36 of each tubular body 35 moreover comprises a plurality of further radial projections 78, each of which emerges between two mutually adjacent longitudinal fins 44, 45. Said further radial projections develop preferably throughout the longitudinal extension of the tubular bodies 35.

The geometrical configuration of the heat-exchange elements, in particular the structure of the longitudinal fins 44, 45 and the presence of the radial projections 77, 78 enable, by virtue of the considerable surface available, a sensible improvement of the heat exchange between the combustion fumes and the water.

With reference once again to Figures 3 and 4, an end part 63 of the first tubular element 10 is provided with a discharge adapter 40 that defines the fume-discharge section 12 of the first tubular element 10; in practice, the discharge adapter 40 performs the function of element of radiusing between the cross section of the first tubular element 10 and the fume-discharge section 12. In this connection, from the cutaway view of Figure 4 it may be noted that the discharge adapter 40 is configured so as to adapt, upstream, to the elliptical cross section of the first tubular element 10, defining, downstream, a substantially circular discharge section 12.

On the basis of what has been illustrated so far, the principle of operation of the device 1 according to the invention is immediately understandable. The hot fumes coming from the combustion chamber C of the boiler 2, traversing the first tubular element 10, lap externally the longitudinal finning 44, 45 of the tubular body 35, transferring the thermal energy to the water circulating within the heat-exchange elements 33. The water is introduced through the first connection 75 into a first heat-exchange element 33, in which it is heated through a heat exchange in equicurrent. By means of the flow-reversal connector 47, the water is then conveyed into a second heat-exchange element and here further heated through a heat exchange in countercurrent. After traversing this second element, the water comes out of the second connection 76 so as to be able to be conveyed to the inlet of the primary heat exchanger of the boiler or, alternatively, be used in domestic appliances.

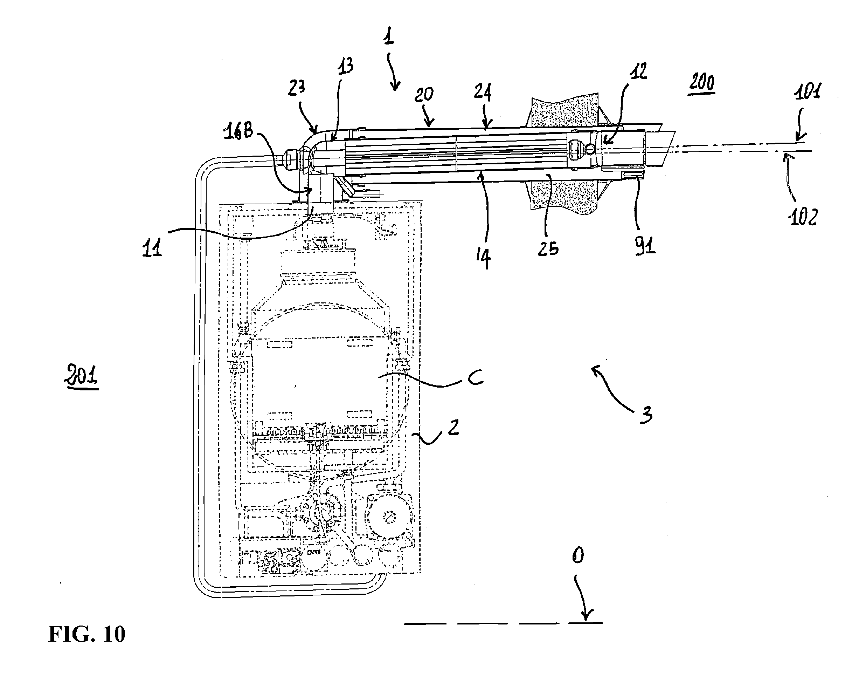

Figures 10 to 16 regard a second embodiment of the device for recovery of fume heat and discharge of fumes according to the invention that can be installed on an attachment surface 2B of a domestic boiler 2 according to a substantially "horizontal" mode such that at least the longitudinal axis 101 or 102 of at least one of the two tubular elements 10, 20 is substantially parallel to the attachment surface 2B, i.e., to a horizontal plane of reference O.

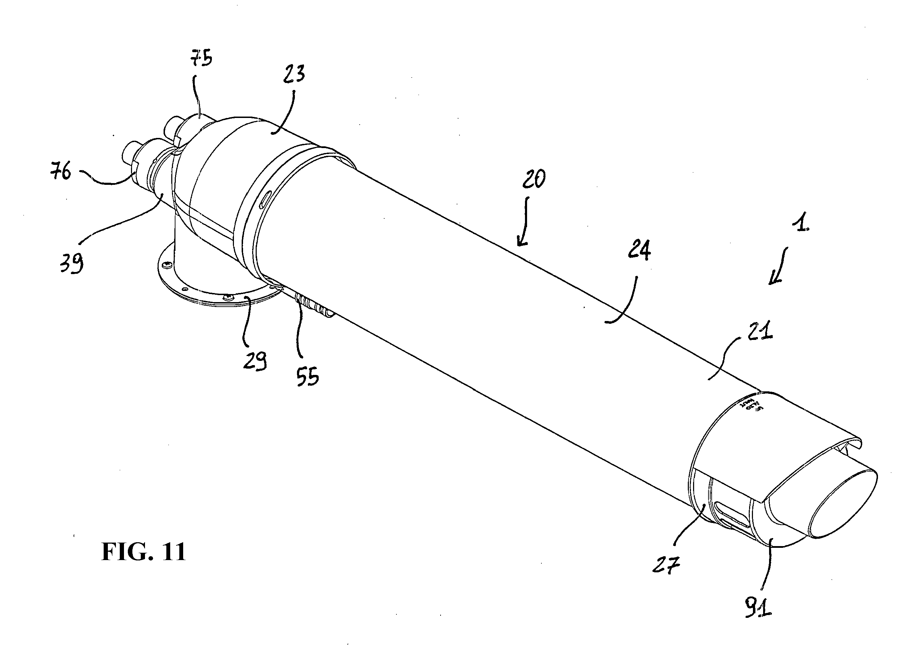

With reference to Figure 11, in this second embodiment each of the two tubular elements 10 and 20 comprises a longitudinal portion 14, 24 and a curved portion 13, 23 connected to one end of the corresponding longitudinal portion 14, 24. The use of a curved portion 13, 23 for each tubular element 10, 20 advantageously enables connection of the device to a boiler 2 and at the same time orientation thereof in space according to the requirements of use in order to facilitate location of the boiler 2 within the boiler room 201.

The longitudinal portion 14 of the first tubular element 10 is configured for housing the heat-exchanger means and is located inside the longitudinal portion 24 of the second tubular element 20. In greater detail, said longitudinal portion 14 is housed so that its longitudinal axis 101 is inclined with respect to the longitudinal axis 102 of the longitudinal portion 24 of the second tubular element 20. This arrangement has the purpose of enabling the flow of the condensate (which is formed as a result of the heat exchange) towards the curved portion 13 of the first tubular element 10, located in the proximity of which are discharge means for the condensate described hereinafter.

With reference to the perspective view of Figure 11, the device 1 is installable on the attachment surface 2B of the boiler 2 in such a way that the longitudinal portion 24 of the second tubular element 20 is substantially parallel to a horizontal plane of reference O. The curved portion 23 of the second tubular element 20 is connected to the attachment surface 2B of the boiler 2. Said connection is obtained through a flanged rim 29 defined at one free end of the curved portion 23 substantially opposite to the end connected to the corresponding longitudinal portion 24 of the second element 20. From the practical standpoint, said mode of connection enables mechanical fixing of the entire device 1 to the boiler 2, but must be considered in any case merely as a possible, and consequently non-exclusive, technical solution.

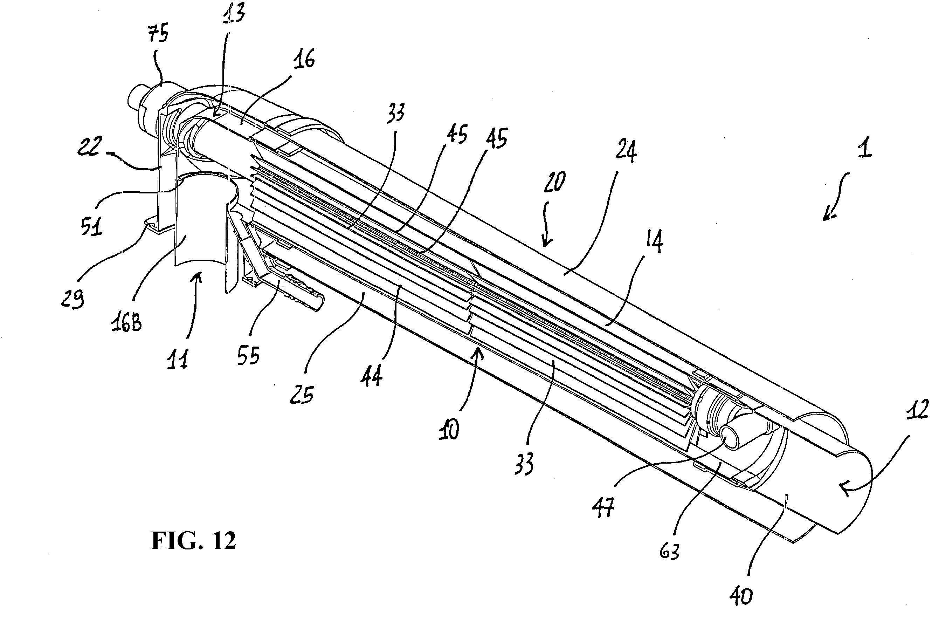

With reference to the cross-sectional view of Figure 12, the curved portion 13 of the first tubular element 10 comprises a first part 16, which connects to one end of the longitudinal portion 14, and a second part 16B, which defines the fume-inlet section 11. In particular, said second part 16B can extend beyond the flanged connection rim 29 from the curved portion 22 of the second tubular element 20. In this way, once the device 1 is connected to the boiler 2, the fume-inlet section 11 is located in a position markedly internal to the casing of the boiler 2 and possibly internal to the combustion chamber thereof (designated by C in Figure 2).

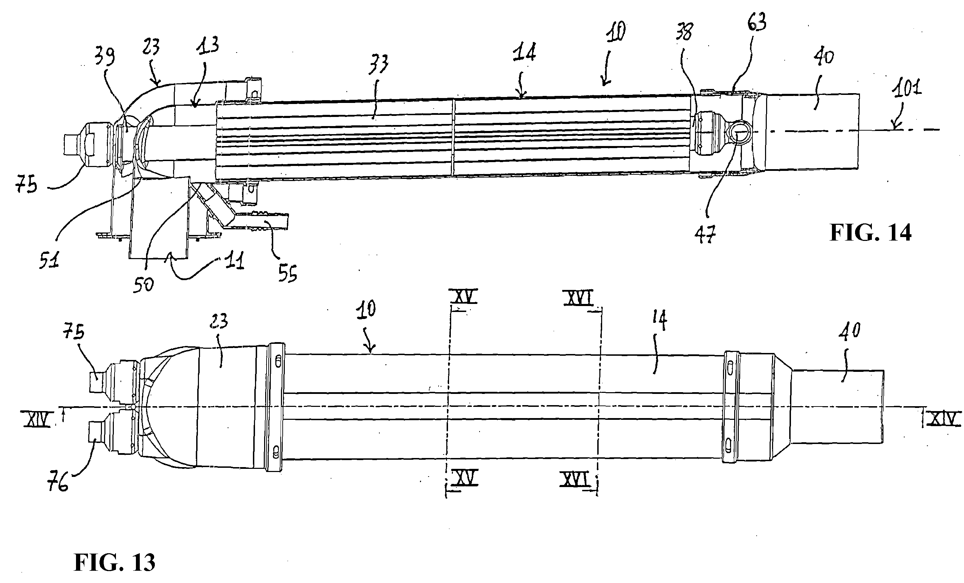

With reference to Figures 13 and 14, also in this second embodiment of the invention, the hydraulic circuit comprises at least one pair of elongated heat-exchange elements 33, which are hollow and oriented at least partially in a longitudinal direction on the outer surface. Said elements 33 are located within the longitudinal portion 14 of the first tubular element 10 so that the longitudinal axis 101 of said portion is parallel to that of the axes of the single elements 33. With reference to Figure 14, for example, it may be noted that each heat-exchange element 33 is operatively set so that one first terminal part thereof 38 is located within the first tubular element 10, whilst a second terminal part 39 opposite to the first 38 comes out of the first tubular element 10 and of the second tubular element 20, traversing the corresponding curved portions 13, 23. In a position corresponding to the second terminal part 39, each heat-exchange element 33 is provided with a hydraulic connection 75, 76 for the purposes already mentioned above in reference to the first embodiment of the device 1. Each hydraulic connection 75, 76 enables the respective elements 33 to be inserted in a hydraulic circuit, as may, for instance, be that for supply of the boiler 2, as appears clearly from the representation of Figure 11.

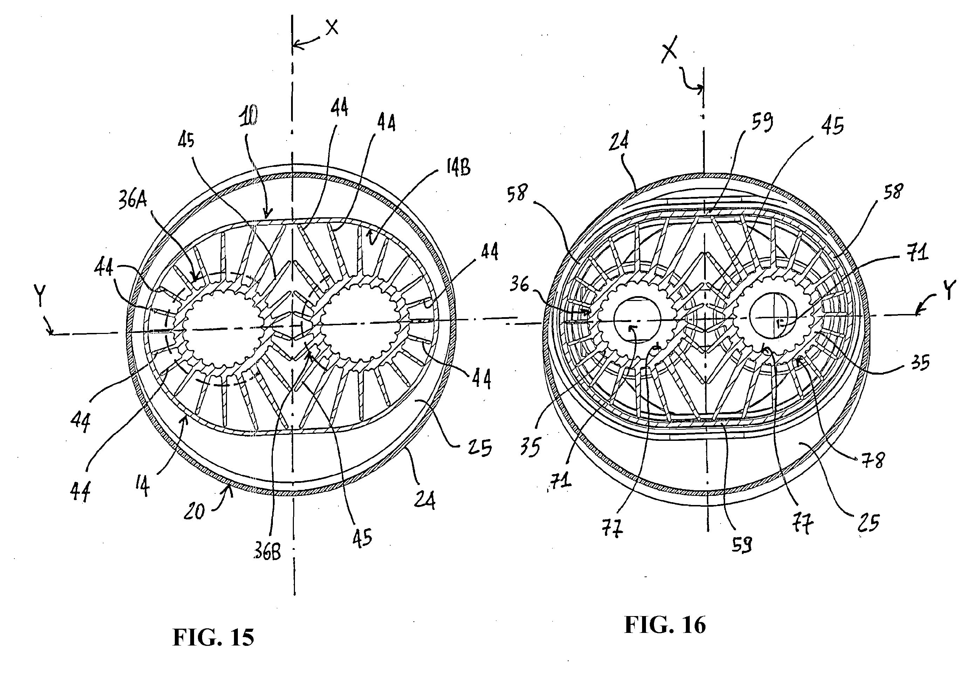

Figures 15 and 16 are sectional views of the longitudinal portions 14, 24 of the tubular elements 10 and 20 of the device 1 that show the structure of the tubular elements 10, 20 themselves, as well as that of the heat-exchange elements 33. As is evident, also in this second embodiment the first tubular element 10 has an ellipsoidal cross section, whilst the second tubular element 20 has a substantially cylindrical cross section. Once again from Figures 15 and 16, it is equally evident that the structure of the heat-exchange elements coincides with the one previously described in reference to Figures 8 and 9. Consequently, the reader is referred, in this connection, to said part of the description.

With reference once again to Figures 13 and 14, also in this second embodiment the device 1 comprises a discharge adapter 40 connected to the end 63 of the first tubular element 10 to configure a substantially circular fume-discharge section 12. With reference, instead, to the perspective view of Figure 11, in this second solution the device 1 preferably comprises a supporting structure 91, which is connected to an outer end 27 of the longitudinal portion 21 of the second tubular element 20 opposite to the end connected to the corresponding curved portion 23. Said structure 91 is substantially ring-shaped and supports the first tubular element 10 in a position corresponding to the discharge adapter 40.

With reference to Figures 12 and 14, the device 1 according to the invention advantageously comprises means for discharge of the condensate that forms within the first tubular element 10 following upon heat exchange between the fumes and the water circulating in the heat-exchanger means. Said condensate-discharge means preferably comprise an annular lip 51 that defines a path of collection of the condensate towards a discharge mouth 50 made on the curved portion 13 of the first tubular element 10. This technical solution solves very effectively and without any additional encumbrance the problem of eliminating the condensate. In particular, it is very advantageous to make the annular lip 51 integrally with the curved portion 13 of the first tubular element 10, for example via stamping or casting, according also to the materials used for production of the first tubular element 10.

Applied in a position corresponding to the discharge mouth 50 is a discharge channel 55, which is capable advantageously to carry the condensate out of the device 1 for recovery of fume heat and discharge of fumes. Said discharge channel 55 will advantageously be provided with siphon means to prevent exit of hot fumes from the first tubular element 10, enabling only discharge of the condensate when this exceeds a pre-set level.

As has been indicated for the discharge adapter 40, also the curved portion 13 of the first tubular element 10 must be structured in such a way that it can be connected downstream of the longitudinal portion 14 defining at the same time, upstream, the fume-inlet section 11. This may be defined in the way most conformable, for example, to the internal connection with the combustion chamber of the boiler. In the solution illustrated, the first part 16 of the curved portion 13 is hence configured for connecting, downstream, to the longitudinal portion 14 of the first tubular element 10, whilst the second part 16B defines, upstream, a substantially circular fume-inlet section 11.

The present invention also regards a heating assembly 3 comprising a boiler 2 and a device 1 for recovery of fume heat and discharge of fumes according to what is mentioned above. Possible embodiments of a heating assembly 3 are illustrated in Figures 2 and 10.

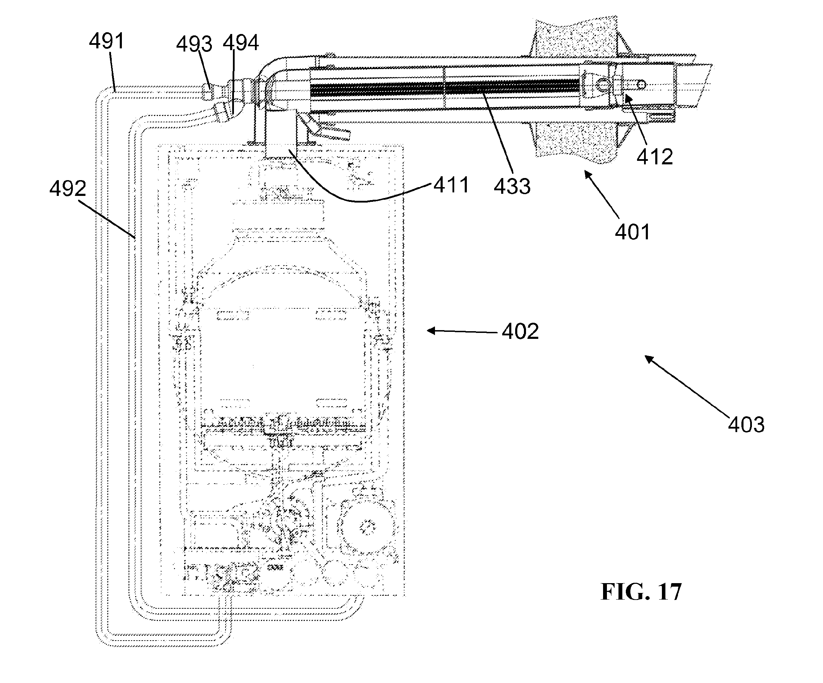

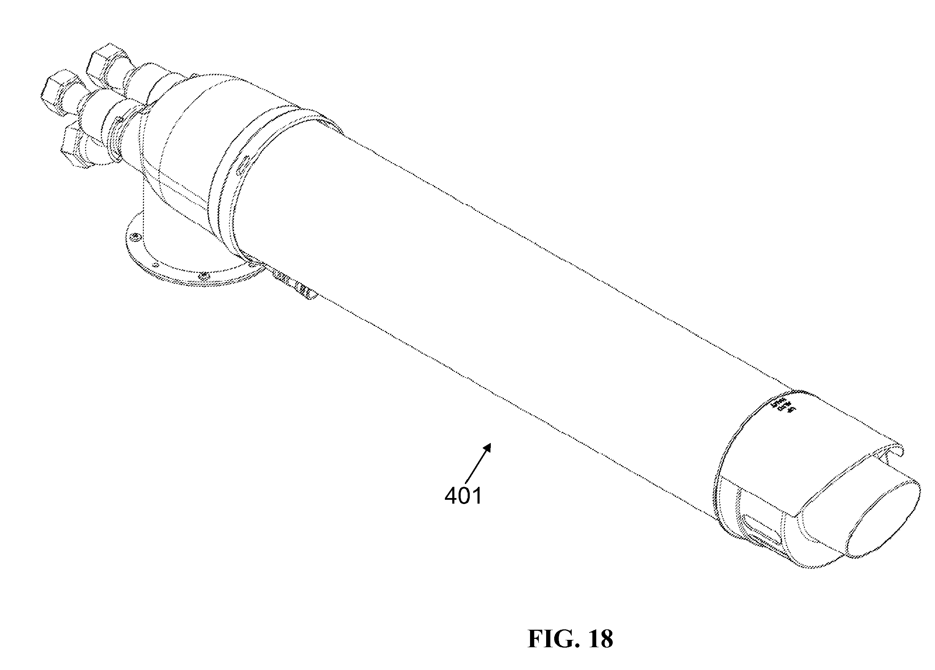

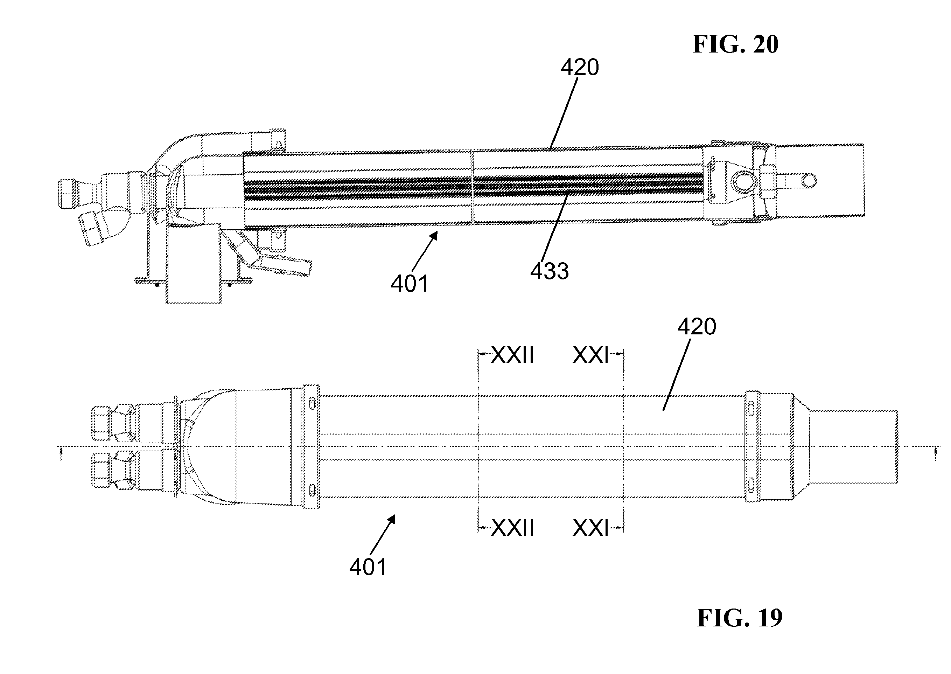

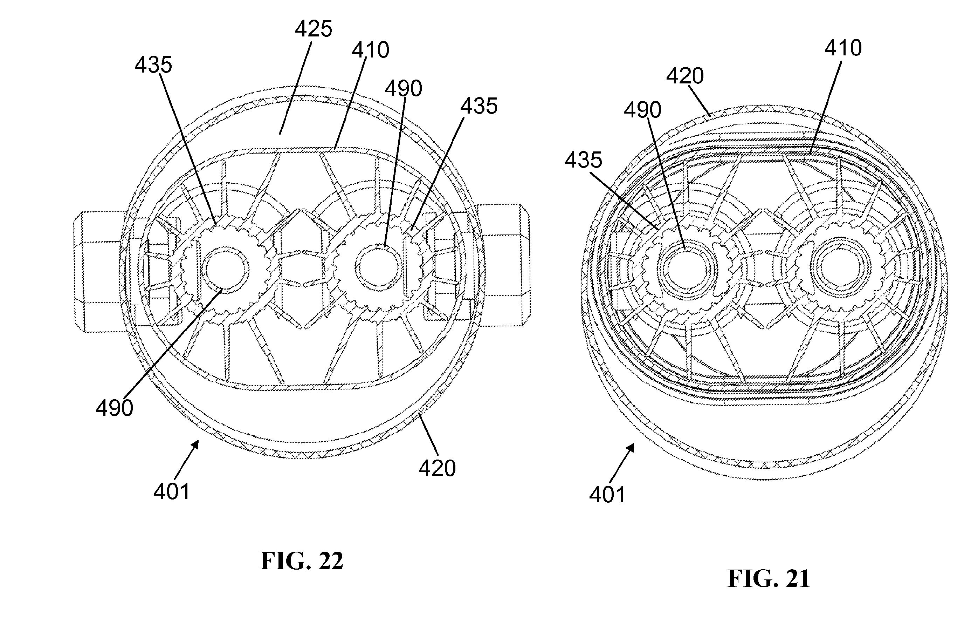

A further embodiment of the same invention, even related with "horizontal" mode, is represented by Figs. 17-22. A device 401 for recovery of fume heat and discharge of fumes is connectable to a boiler 402 so as to form a heating assembly 403. Said device 1 comprises a first tubular element 410 susceptible to be traversed by fumes produced in said boiler 402. The tubular element 410 comprises a fume-inlet section 411 and a fume-discharge section 412 opposite to said fume-inlet section 411. The device 401 comprises heat-exchanger means housed within said first tubular element 410 for transferring thermal energy of said fumes to the water at a lower temperature circulating within said heat-exchanger means. The heat-exchanger means comprise heat-exchange elements 433 reciprocally connected so as to form a hydraulic circuit inside said first tubular element 410 such that the transfer of the thermal energy occurs partially in conditions of equicurrent and partially in conditions of countercurrent.

The heat-exchange elements 433 comprise an external tubular body 435 and an internal tubular body 490, coaxial to the external tubular body 435.

Advantageously, the internal tubular body 490 is connected with a sanitary water circuit 491 (for bathroom, kitchen and so on) through connections 493; the external tubular body 435 is connected to a heat circuit 492 by means of connections 494.

Note that sanitary water is normally used for a multitude of short time slots, and the heat water is used for few prolonged periods and, in the greater part of the inhabited places, only during determined periods of the year. Thus, it is advantageous to use the external tubular body 435 for heat in order to waste the least possible amount of energy. During warm seasons, when the heat is not required, the water for the heat, inside the tubular element, is still and, hence, warms so as to transfer heat to the sanitary water.

The device 401 for recovery of fume heat and discharge of fumes comprises a second tubular element 420 inside which the first tubular element 410 is placed so as to generate an annular space 425 for air to flow, said air being addressed to the boiler 402 and usable as comburent in the combustion chamber of the boiler.

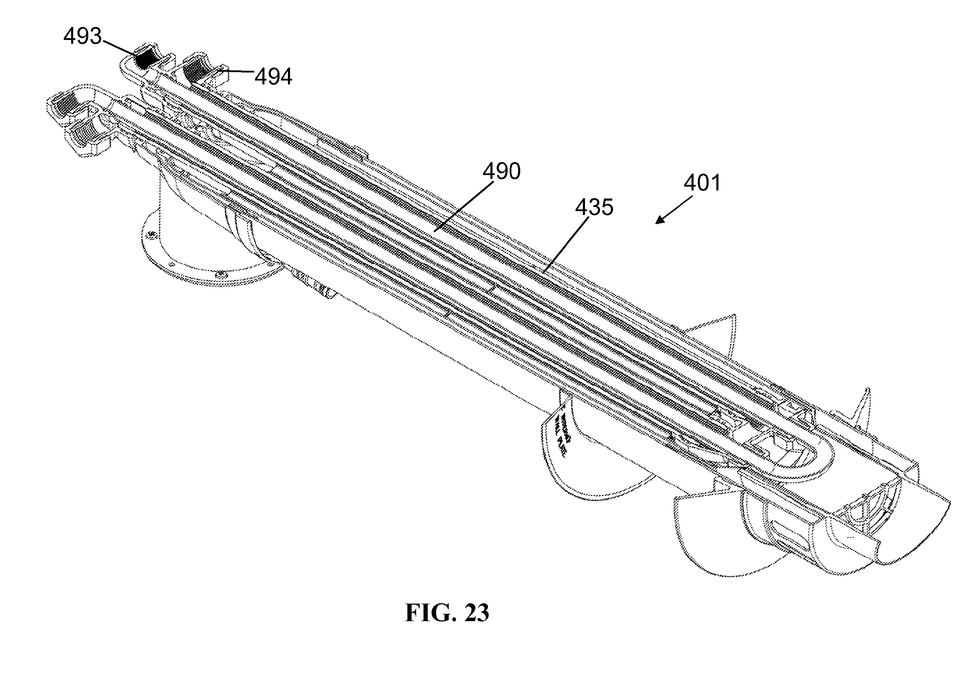

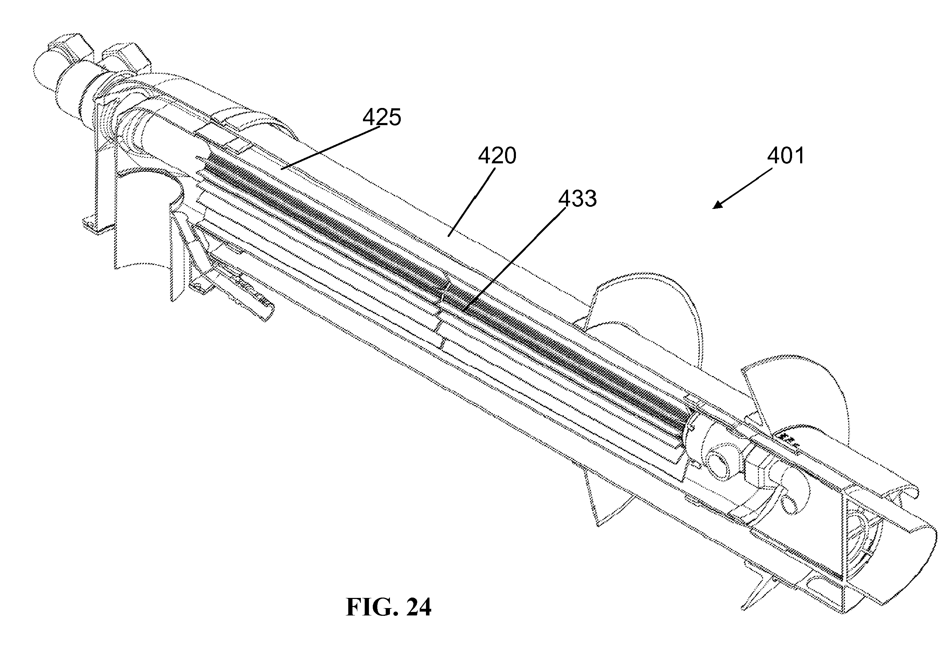

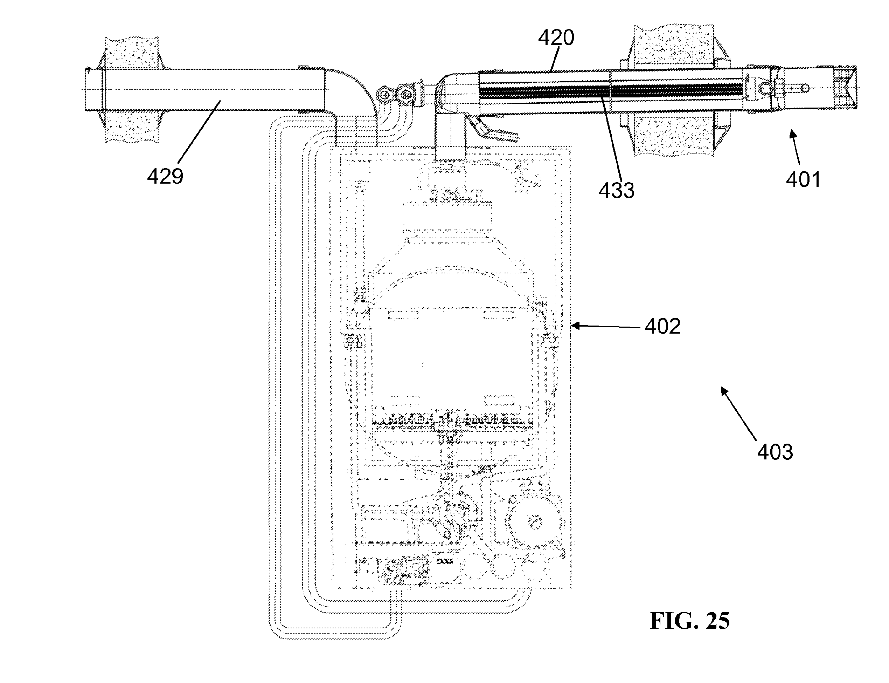

A variant is illustrated in Figs. 23-24, wherein there is provided a device 401 for recovery of fume heat and discharge of fumes which is different from the embodiment of Figs. 17-22 because of the shape of the connections 492, 493, which present a shape of an elbow curve. A further variant is illustrated in Fig. 25, which is different from the embodiment of Figs. 23-24 in that the air addressed to the boiler flows in a dedicated pipe 429 which is not coaxial to the tubular element 410.

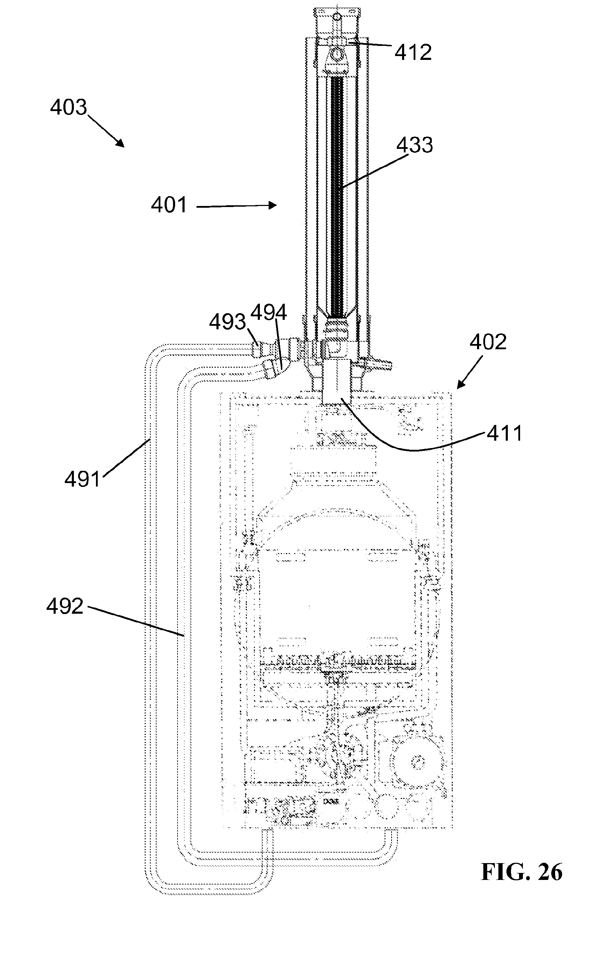

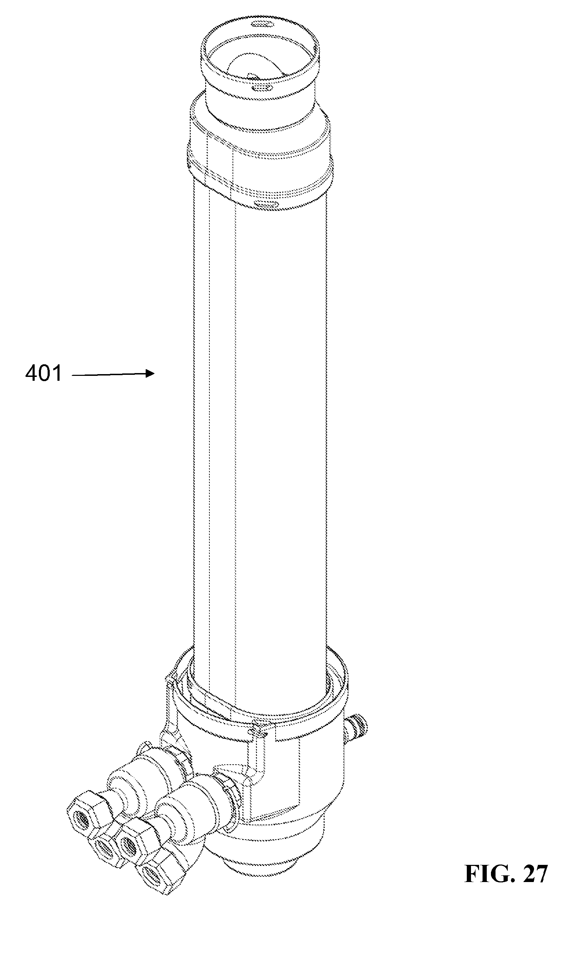

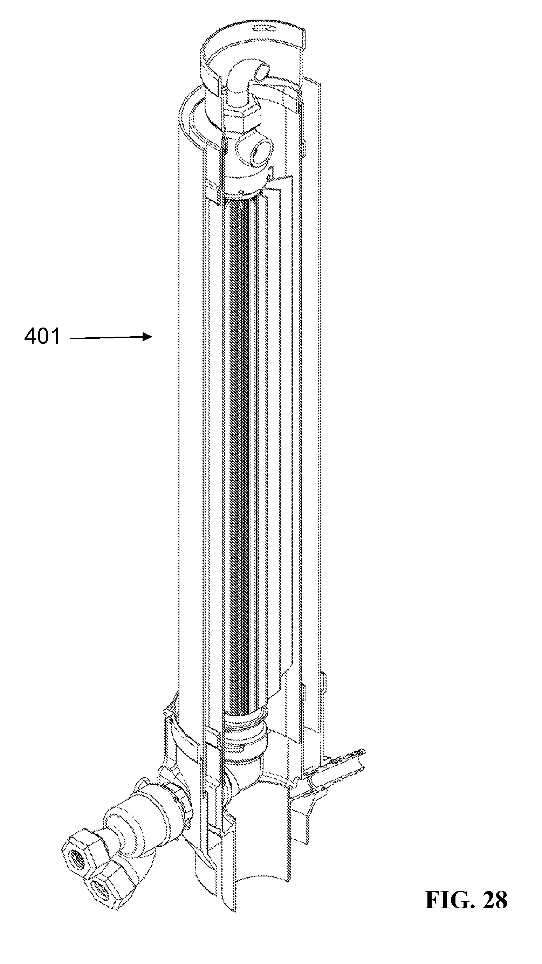

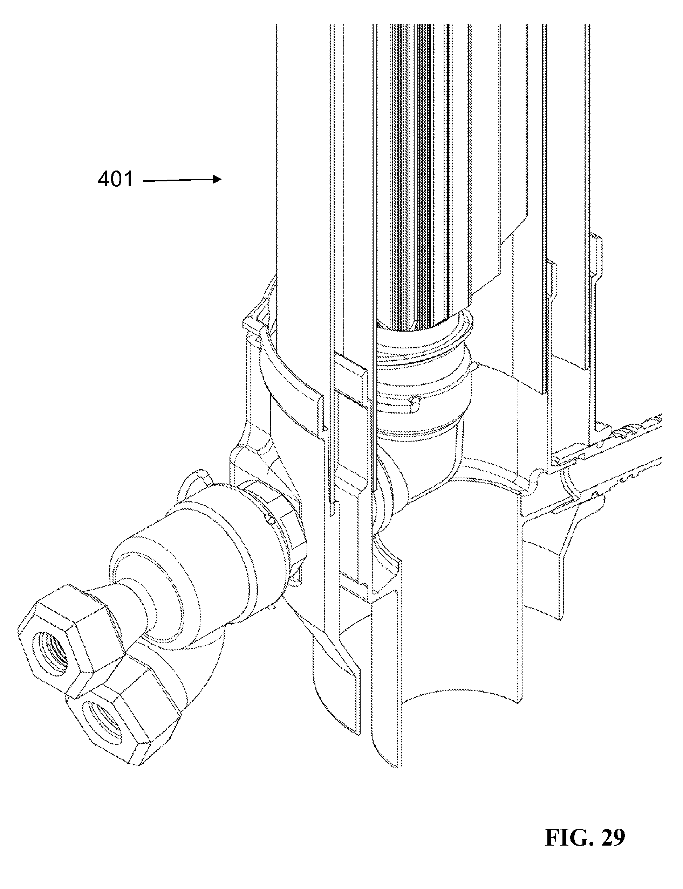

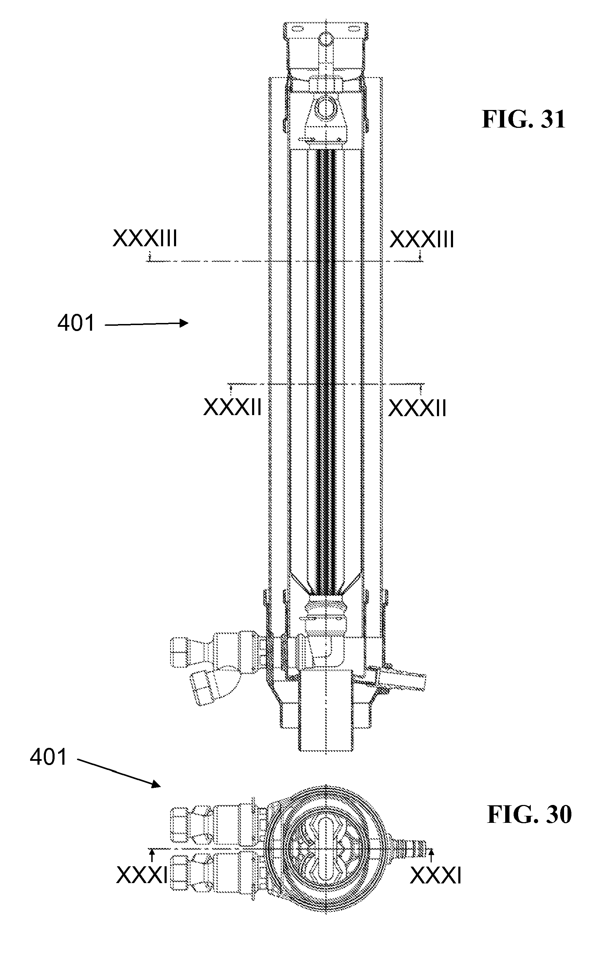

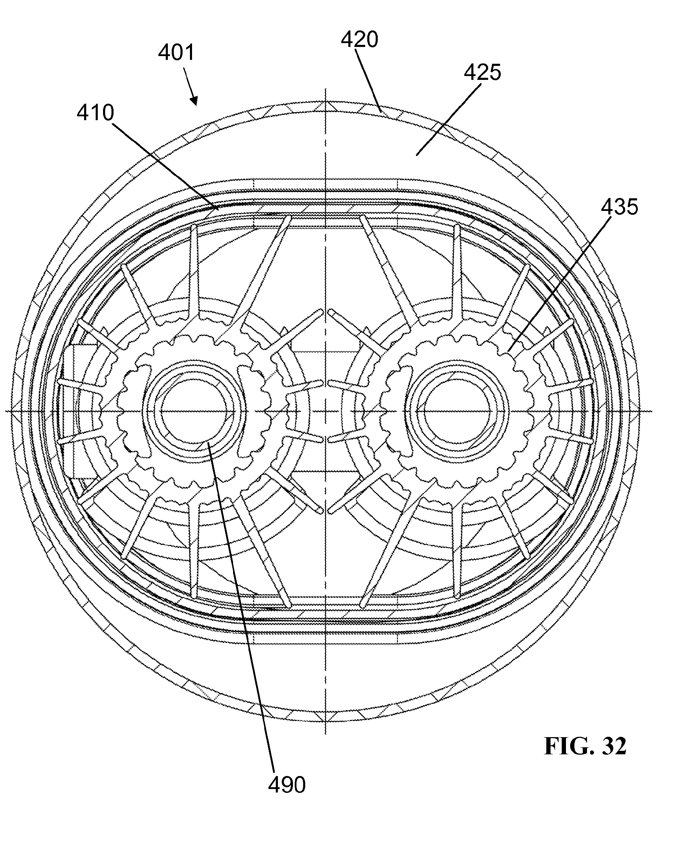

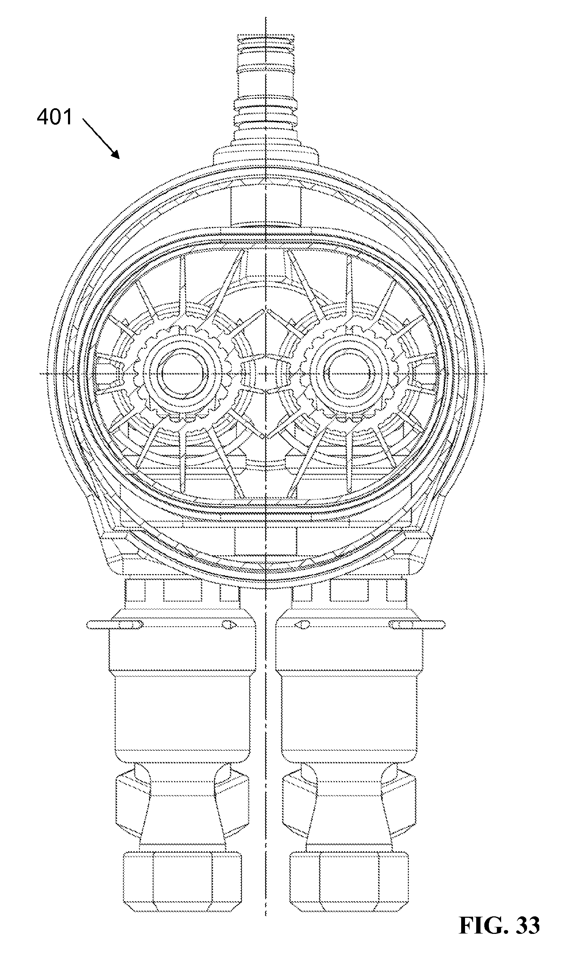

A further embodiment of the same invention, related to the "vertical" mode, is shown by Figs. 26-33, wherein the same reference numbers are used as the ones of the embodiment of Figs. 17-22.

The technical solutions adopted for the device for discharge of fumes enable the pre-set tasks and purposes to be fully accomplished. In particular, the device for recovery of fume heat and discharge of fumes is obtained through a small number of components that can be easily assembled together. The configuration of the heat-exchanger means enables a high efficiency to be achieved in the heat exchange, which leads, among other advantages, to an increase in the amount of water that can be heated, which, in turn, results in an increase in the efficiency of the boiler to which the device is connected.

The device for recovery of fume heat and discharge of fumes thus conceived may undergo numerous modifications and variations, all falling within the scope of the inventive idea; moreover, all the items may be replaced by other technically equivalent ones.

In practice, the materials used, as well as the contingent dimensions and shapes, may be any whatsoever according to the requirements and the state of the art.

## Claims

1. A device (1) for recovery of fume heat and discharge of fumes, which is connectable to a boiler (2) and comprises at least one first tubular element (10), which is susceptible to be traversed by said fumes produced in said boiler (2), said tubular element (10) comprising a fume-inlet section (11) and a fume-discharge section (12) opposite to said fume-inlet section (11), said device (1) comprising heat-exchanger means housed within said first tubular element (10) for transferring at least part of the thermal energy of said fumes to the water at a lower temperature circulating within said heat-exchanger means, said device (1) being **characterized in that** said heat-exchanger means comprise a plurality of heat-exchange elements (33) connected together so as to configure a hydraulic circuit within said first tubular element (10) such that the transfer of said at least part of the thermal energy occurs partially in conditions of equicurrent and partially in conditions of countercurrent.

2. The device (1) according to Claim 1, wherein said device comprises a second tubular element (20), housed within which is said first tubular element (10) in such a way as to generate an annular space (25) for the passage of air.

3. The device (1) according to Claim 2, wherein said second tubular element (20) is set in a substantially coaxial position with respect to said first tubular element (10).

4. The device (1) according to Claim 2 or Claim 3, wherein said device (1) comprises an adapter (5) for connecting said tubular elements (10, 20) to an attachment surface (2B) of a boiler (2) so that the longitudinal axis of said tubular elements (10, 20) is in a position substantially orthogonal to said attachment surface (2B).

5. The device (1) according to Claim 4, wherein said adapter (5) comprises supporting portions (17), prearranged for supporting at least one first hydraulic connection (75) for the inlet of water in said hydraulic circuit and at least one second hydraulic connection (76) for evacuation of water from said hydraulic circuit.

6. The device (1) according to Claim 4 or Claim 5, wherein said adapter (5) comprises an external connection body (6) and an internal connection body (7) respectively for connecting said second tubular element (20) and said first tubular element (10) to said attachment surface (2B) of said boiler (2).

7. The device (1) according to Claim 1 or Claim 2, wherein said first tubular element (10) comprises a longitudinal portion (14) housed within a longitudinal portion (24) of said second tubular element (20), said first element (10) comprising a curved portion (13) housed within a curved portion (23) of said second tubular element (20), each of said curved portions (13, 23) being connected on one side to a longitudinal portion (14, 24) of the corresponding tubular element (10, 20), wherein provided within said curved portion (13) of said first tubular element (10) is an internal annular lip (51) for conveying products of condensate towards a discharge mouth (50) made on said curved portion (13).

8. The device (1) according to one or more of Claims 1 to 7, wherein said hydraulic circuit comprises a pair of elongated heat-exchange elements (33), which are hollow for being traversed by said water, said elongated elements (33) each comprising at least one first terminal part (38) located operatively within said first tubular element (10), said heat-exchanger means comprising a flow-reversal connector (47), which connects together said elongated elements (33) each at the respective first terminal part (38).

9. The device according to Claim 8, wherein each elongated element (33) comprises a second terminal part (39), opposite to the first (38), which comes out on the outside of said first tubular element (10) and said second tubular element (20).

10. The device (1) according to Claim 8 or Claim 9, wherein said longitudinal portion (14) of said first tubular element (10) has an ellipsoidal cross section made up of a pair of semicircular portions (58), which are symmetrical with respect to a first axis of symmetry (X) and connected together through a pair of rectilinear portions (59), which are opposed with respect to a second axis of symmetry (Y) of said cross section, said elongated elements (33) being set inside said first longitudinal portion (14) so that the respective longitudinal axes (300) are set on said second axis of symmetry (Y) and are in a position symmetrical with respect to said first axis of symmetry (X).

11. The device (1) according to Claim 10, wherein each elongated heat-exchange element (33) comprises a tubular body (35) provided with a longitudinal cavity (71), the internal surface of which comprises a plurality of radial projections (77) that develop longitudinally, said tubular body (35) comprising an outer surface (36) provided with a plurality of longitudinal fins (44, 45).

12. The device (1) according to Claim 11, wherein said tubular body (35) comprises a series of first longitudinal fins (44) that extend from a first portion (36A) of said outer surface (36) symmetrically with respect to said second axis of symmetry (Y) and up to a position adjacent to the internal surface (14B) of said longitudinal portion (14) of said first tubular element (10), said elongated elements (33) being operatively located so that said first fins (44) of one of the two elements are specular to corresponding first fins (44) of the other element with respect to said first axis of symmetry (X).

13. The device (1) according to Claim 12, wherein said tubular body (35) comprises a series of second fins (45) that extend from a second portion (36B) of said outer surface (36), different from said first portion (36A), symmetrically with respect to said second axis of symmetry (Y), said second fins (45) of one of said elements (33) extending in such a way as to be specular to corresponding fins of the other element with respect to said first axis of symmetry (X).

14. The device (1) according to one or more of Claims 1 to 13, wherein said first tubular element (10) comprises a discharge adapter (40) connected to an end part thereof (63), said discharge adapter (40) defining said fume-discharge section (12).

15. The device according to at least one for the previous claims, wherein said heat-exchange elements (433) comprise an internal tubular body (490) for connection with a first water circuit and an external tubular body (435) for connection with a second water circuit (490).

16. A heating assembly (3) comprising a boiler (2) and **characterized in that** it comprises a device (1) for recovery of fume heat and discharge of fumes according to any one of Claims 1 to 15.
